(19) Europäisches Patentamt
European Patent Office
Office européen des brevets

(11) Publication number: **0 524 367 A1**

(12) **EUROPEAN PATENT APPLICATION**

(21) Application number: **91870113.7**

(51) Int. Cl.5: **G01T 1/04**

(22) Date of filing: **23.07.91**

(43) Date of publication of application:
**27.01.93 Bulletin 93/04**

(84) Designated Contracting States:
**BE DE FR GB**

(71) Applicant: **RIJKSUNIVERSITEIT GENT**
**Instituut voor Nucleaire Wetenschappen,**
**Proeftuinstraat, 86**
**B-9000 Gent(BE)**

(72) Inventor: **Van Laere, Koen**
**Vinkenstraat, 12**
**B-9120 Destelbergen(BE)**

(74) Representative: **Vanderperre, Robert et al**
**Bureau Vander Haeghen S.A. Rue Colonel Bourg 108 A**
**B-1040 Bruxelles(BE)**

(54) **Dosimetric system for measuring high doses of irradiation.**

(57) A dose of irradiation absorbed on a sample of solid α-alanine is measured by a dosimetric system comprising :
- an ammonia-probe (1) ;
- a pH-electrode (2) ;
- an electronical balance (16) ;
- an ISE-electrometer (4) (ISE = Ion-Selective Amonia Electrode)
- pumping units (17) + (18) ;
- a temperature-sensor (14) ;
- a computer (7) ;
- a printer (6) and further, according to the invention :
- a readout equipment and a configuration for automatic use of an Ion-Selective Ammonia Electrode, formed of the above mentioned components and their interfaces to a central PC, which allows
  1) the complete control of the attached instruments (dispenser,balance, potentiometer)
  2) a direct and continuous measurement of all parameters which are important for the $NH_3$ measurement (temperature, potential, volume, mass).
- an analysis software with a serial calibration of a blank sample and automatic correction of temperature, fading radiation energy and dose-rate dependence by potential extrapolation and improved accuracy ; and
- a detector material composition consisting of pure (DL- or L-) α-alanine, blended with agents for appropriate $H_2O$ - dissolution, tablet geometry, radiation characteristics and ruggedness.

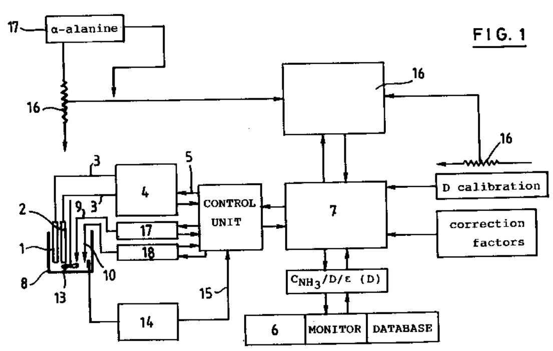


FIG. 1

EP 0 524 367 A1

The present invention relates to a dosimetric system for measuring a high dose of irradiation absorbed by a sample of solid $\alpha$- alanine, comprising :

- an ammonia-probe;
- a pH-electrode;
- an electronical balance;
- a potentiometer
- pumping units
- a temperature-sensor;
- a computer, and
- a printer.

The system finds its main application as laboratory standard and in routine dosimetry covering a range of about 1 to 1000 kGy. This range is especially useful for industrial food irradiation, sterilization of medical supplies, radiation curing and crosslinking, treatment of sewage and material resistance tests.

Irradiation of solid $\alpha$-alanine samples, after dissolution in water, produces an amount of ammonia, which can be used as an indication of the absorbed dose.

A methodology for high-dose dosimetry, employing a ion-selective electrode (ISE) for measuring the ammonia content of an aqueous sample after dissolving irradiated solid $\alpha$-alanine in water is already known by publications in Appl. Radiat. Isot. 41 (1990) Van Laere K. and Buysse J., Operation and Methodology of an alanine ion-selective electrode dosimetric system : Part I : Electrode characteristics and data analysis, and Part II : Dose Response -pages 621-633.

Dissolution of the irradiated solid $\alpha$-alanine in neutral or slighly acid water results in the formation of the ammonium ion.

$$CH_3CH(NH_3+)\ COO- \xrightarrow{pH<7} NH_4+\ (aq)$$

Addition of a sufficient amount of basic agent conduces to the complete conversion to the gaseous molecule.

The gaseous ammonia content is evaluated after diffusion of the dissolved gas through a 0.1 mm thin Teflon micropore hydrophobic membrane foil with 1 $\mu$m mean pore diameter into a pH sensitive layer.

The diffusion process is governed by the ammonia partial pressure and equilibrium is reached when the partial pressures on both sides of the membrane are the same.

The pH sensitive layer contains neutral $NH_4Cl$ and allows formation of hydroxide ions by a shift in the $NH_3$-$NH_4$ + hydrolysis equilibrium. The hydroxide ion activity induces an electrochemical potential at the electrolyte/electrode interface of a pH electrode coupled to a Ag/AgCl reference electrode.

The advantages of the Ion-Selective Ammonia Electrode (ISE) in regard to other physico-chemical detection methods, for example by Electron Spin Resonance spectrometer or by a spectrophotometric method using FX dosimeter are explained in Appl. Radiat. Isot. Vol 40 N° 10-12 (1989). K. VAN LAERE et al, Alanine in High-Dose Dosimetry : Spectrophotometric and Electrochemical Readout Procedures compared with ESR, pp 885-895.

The drawbacks of the ion-selective gas electrode for routine dosimetry are of three types with respect to non-automatized dosimetric systems :

1. The response speed of the Ion-Selective Ammonia Electrode is at least 3 minutes. (defined as "the time at which the variation in signal does not exceed a certain mV/time unit slope anymore").
2. The measurements must be performed at a constant temperature. They necessitate thermostatted water jackets for accurate measurements. The temperature dependance is 4 to 6% pro °C.
3. Set up and calibration are not satisfying.

The present patent application aims to remedy those drawbacks and proposes an Alanine Ion-Selective Electrode Dosimetric system enjoying a good readout speed and ensuring an improved accuracy and enhancement of the practical application of this readout technique, achieved by the production of dosimeter pellets.

It relates to an apparatus enabling automatized determination and expands the readout system by as well as multiple addition, especially at low doses, by employing drift controlled kinetics with a suitable transfer equation.

The dosimetric system for measuring high doses of irradiation according to the invention is of the type described in the first paragraphe of the specification. It is characterized in that the potentiometer is a dual-input potentiometer and in that it comprises further :

i) readout configuration for automatic use of an Ion-Selective Ammonia Electrode, formed of the components, described on page 1, and their interfaces to a central PC, which allows

1) the complete control of the attached instruments (dispenser, balance, potentiometer)

2) a direct and continuous measurement of all parameters which are important for the $NH_3$ measurement (temperature, potential, volume, mass).

ii) analysis software with an improved time response by potential extrapolation and improved accuracy,

iii) the detector material composition consisting of pure (DL- or L-)$\alpha$-alanine, blended with agents for appropriate $H_2O$ - dissolution, tablet geometry, radiation characteristics and ruggedness.

The parameters for this transfer equation are calculated by non-linear regression with least square fitting by an iterative GAUSS-NEWTON method. The electrochemical potential E is represented as a function of the assumed error-free independent variable determinant concentratrion $C_d$.

The software of the automatized dosimetric system takes into account blank-corrections and volume correction by multiple additions.

Other features and details of the invention will emerge in the course of the following description of the drawings accompanying the present specification, which illustrate schematically a preferred form of embodiment of dosimetric system according to the invention.

In these drawings :

Figure 1 is a block diagram illustrating schematically an experimental set-up of dosimetric system according to the invention and

Figure 2 is a log diagram showing schematically the various steps of the program used in the process according to the invention.

In these different figures the same reference numerals designate identical or simular parts.

In a first embodiment of the invention, the sample analysis occurs by direct concentration measurement after this foregoing calibration or by incremental techniques (single, double or multiple addition). Experimental set-up is shown schematically by a block-diagram in figure 1. It comprises an ammonia probe 1 (for example of the type ORION 91-02) connected to the dual input 3 of an ORION EA 940 ISE-electrometer 4. This electrometer is connected to a 960 CONTROL UNIT by means of a coaxial cable with BNC plug 5 and forms with said CONTROL UNIT an ORION 960 Autochemistry System (ACS).

The ACS is controlled by a central personal computer 7 (for example IBM XT/AT)) connected to a printer 6. Samples 17 of about 100 mg (default value) $\alpha$-alanine are weighed on a Precisa 240A balance 16 (resolution 0.1 mg), which is connected to the central processor unit (CPU) of said personal computer through a RS-232C interface 12. The sample is inserted manually into a glass container 8 (3,5 cm diameter, 4 cm height) and dissolved in 25 ml doubly-distilled water. The glass container 8 is positioned under two dispensers 9 + 10. The first dispenser adds an amount of 0,5 ml NaOH of 5 M, immediately prior to measurements, in order to adjust the pH value between 11,0 and 13,0. The second dispenser 10 adds $NH_4Cl$. The glass container 8 is further provided with the pH electrode 2 so as with a stirrer 13 and a temperature probe 14 which gives a current signal to the electrometer 4 connected to the control unit with a banane-plug 15. The pH electrode 2 is immersed at an angle with respect to the vertical in order to prevent air-bubble entrapment under the electrodes 1, 2. Interaction with the ACS, analysis of the data and interactive imput occur through a computer program.

Input data from the irradiations consist of the calibration irradiation data (beam monotoring values, Fricke calibration data) and correction factors (irradiation temperature, fading, radiation energy and dose-rate dependence).

The kinetic behavior of the electrode is described through a theoretical dynamical diffusion model, which allows the asymtotic value of the potential E to be found through a functional fit of E vs. t (Levenberg-Marquardt algorithm). A termination benchmark for the assessment of this equilibrium potential calculation is given by statement of a minimal potential difference that is permitted between two successive extrapolated values for $E\infty$ at the equilibrium. Measurements times between 40 and 60 seconds are observed for one E-determination. This is a factor 2 to 3 faster than the conventional differential slope analysis.

The concentration calibrations E vs. c are obtained by an automatic calibration by addition by means of dispenser 10 of standard $NH_4Cl$ to the solution. The proper modified Nicholskii-Eisenman equation is calculated by non-linear regression.

The Nernst equation is not able to describe the correct ammonia concentration because the electrode potential response of the $\alpha$-alanine-ammonia ISE system does not behave in a linear fashion for low concentrations of the determinative substances, particularly for low levels of ammonia.

By the above publication in Appl. Radial Int. 41 (1990), page 625, it is already known to introduce a single suitable interference term in the Nernst equation, in order to include all disturbances from reagentia

and electrode. This interference term gives a transfer function which is similar to the modified Nicholskii-Eisenman equation :

$E = Eo + S \log (C_d + b)$

The electrochemical potential is given as a function of the OH-activity by the Nernst equation :

$$E = E'_o + \frac{RT}{ZF} \ln a_{OH}$$

where $E'_o$ denotes the zero potential (i.e. the theoretical potential at a unity $OH^-$ activity ;
R = the gas constant (R = 5,3143 mol °$C^{-1}$)
F = the Faraday constant (F = 96487 C $mol^{-1}$)
Z = -1 for $OH^-$
T = temperature in Kelvin. (K)

The optimal procedure for concentration determination depends on the concentration level and can be selected at program start.

At higher concentrations, i.e. at doses from about 10 kGy on, it is highly convenient to obtain the appropriate concentration through direct measurement of the potential and calculation through the Nicholskii-Eisenmann equation. The process according to the invention uses addition techniques, which necessitate a similar mathematical approach as the serial calibration of a blank sample. It enables straightforward measurement of the electrode parameters as well. In the latter case no preceding calibration is needed once the blank value b for the used solution and alanine batch are known. This technique was preferred at doses lower than about 10 kGy by reason of a significant improvement in accurate $NH_3$ assessment.

Once the concentration is computed, the absorbed dose in the dosimeter is calculated from the dose calibration curve, with corrections for the sample (e.g. analysis temperature) and the irradiation (dose rate, fading, irradiation temperature, radiation spectrum).

The error estimate on the dose of irradiation of the sample is calculated from the combined uncertainties of the calibration factor, the ammonia concentration (derived from the uncertainties on the parameters in the Nicholskii-Eisenmann equation) and the above correction factors.

The duration of the analysis is less than 3 minutes owing the choice of the end criterium of the measurement of the potential.

The dosimetric system is limited for applications at low doses especially in a range below 300 Gy Multiple addition is possible.

The results are edited on-line and written to an output device or stored for further processing.

Some typical characteristics of the alanine-ammonia ion-selective electrode system are summarized in table 1 :

Table 1

| Typical characteristics and performance of the automatized alanine-ion-selective electrode (ISE) readout. | |
|---|---|
| Total analysis time<br>Volume for analysis<br>Useful dose range<br>Reproductibility | 1 - 3 minutes (dependent concentration $NH_3$)<br>2 - 10 ml<br>0.5 - 3000 kGy<br>2-3% (95% confidence limit) |
| $NH_3$ calibration | * together with analysis (low D)<br>* preceding (D > 10 kGy) |

The advantages of the detector system are the wide absorbed dose range (0.5 to 3000 kGy), the accuracy of the absorbed dose measurement, simplicity, fastness and relative cheapness.

All the advantages of α-alanine for radiation dosimetry are maintained :

radiation sensivity, cheapness, time equivalence, stability before and after irradiation, wide usable temperature range with ease of correction (linear at least from -30 to 90° C).

For convenient measurements, practical pellets of the alanine dosimeter were developed by addition of several chemicals to the α-alanine. The composition limits for the components of these pellets are shown in table 2. All components are water soluble substances that do not interfere in any way with the measurement process. The α-alanine is pressed into a desired form. As example, in this table the specific characteristics are also given for the electron dosimeter pellet. The matrix composition can also be used with the ESR technique.

Table 2. Composition limits of the practical pellets and specific contents for electron beam tablet.

| | | | |
|---|---|---|---|
| α-alanine (L- or DL-) | $CH_3H_7O_2N$ | 70-80% | 74.8% |
| Explotab | $C_{20}H_{30}O_{17}Na$ | 0.2-2% | 0.5% |
| Aerosil | $SiO_2$ | 0-2% | 0.5% |
| Avicel (microcrystalline cellulose) | $C_6H_{10}O_5$ | 15-30% | 21.3% |
| Sodium benzoate | $C_7H_5O_2Na$ | 2-5% | 2.9% |
| | | | ------- |
| | | | 100,0% |

Characteristics for electron pellet :

| | |
|---|---|
| ⟨Z/A⟩eff | 0.5359 |
| thickness | 2.0 mm |
| diameter | 7.0 mm |
| mean mass (6 = 1%) | 100.0 mg |
| dissolution and desintegration speed | 30 sec. |
| hardness | 4 kg |
| friability | 1% |

The values given in table 2 are no strict limitations but merely indications and the composition of the detector material composition, depend on specific sensitivity or dissolution details, between the values given in said table 2.

The program for the dose analysis by means of an Ion-Selective Amonia Electrode includes the following steps :

* The Orion 960 system is set in the connection mode (manually). Appropriate coding signals are sent from the program interface subroutine to take control over the 960. Interfacing with balance.
* The pH $(E, pH)_i$ and dose $(c(NH_3),D)_i$ calibration data are read from the data files.
* Input data are read in :
  - mass alanine from balance (RS232)
  - powder or tablet of α-alanine is dissolved in a solution of initial volume $V_o$; the maximum volume standard is then given, also the concentration of the standard solution, output file name, differences between $E_i$, ∞ required and stabilization time before analysis.

The program comprises further one of the following steps depending on the option :

1. Serial calibration electrode

- input number of calibration points (ITOT)
- for each point i :
  * calculate volume $V_i$ with volume correction
  * calculate concentration c from $V_i$ and mass
  * measure potential E(subroutine "analyse", see further)
- calculate electrode parameters $E_i$, S and b, with uncertainties, from the transfer function

$$E = E_o + S \log(c+b) \quad (1)$$

The potential E is recorded two minutes after stabilization, which is indicated on the display and evaluated through the transfert function by a non-linear regression (Levenberg-Marquardt algorithm)

2. Direct measurement

- read electrode parameters $E_o$, S and b from preceding calibration or from input
- measure E by subroutine "analyse"
- calculate concentration c from eq. 1. The ammonia-concentration liberated by the irradiation of the $\alpha$-alanine powder or tablets induces a potential difference in the Ion-Selective Ammonia electrode and is measured directly in concentration units on the Orion digital pH-meter.

3. Multiple addition

- read number of required addition (ITOT)
- for each addition i :
  * calculate addition volume $V_i$ to reach approximately a preset potential step $\Delta$ E from

$$V_i = \frac{a(c_{i-1}) + b\sum_{j=0}^{i-1} V_j - b\sum_{j=0}^{i-1} V_j - c_s\sum_{j=1}^{i-1} V_j}{c_s + b - a(c_{i-1}+b)} \quad (2)$$

  Where $a = 10^{\Delta E/S}$ and $c_s$ the concentration of the standard.
  * measure the potential $E_i$
- calculate c from equation 1 with determination of the parameters, Levenberg-Marquardt algorithm with volume correction :

$$E'_i = E_i - S'\log\eta_i = E_0 + S\log\left(\frac{c_i}{\eta_i} + c'_x\right) \quad (3)$$

with $S' \cong S$ (theoretical at temperature T) and

$$\eta_i = \frac{V_0}{V_0 + \sum_{j=1}^{i} V_i} \quad (4)$$

* after 2 and 3 :
  - input dose correction data (irradiation temperature, beam energy, time of irradiation)

- calculate dose and dose uncertainty from

$$D_w = (N_{D,w})_c \, c_x \frac{Vm_0}{mV_0} \prod_i k_i \prod_j k_j \qquad (5)$$

where $N_{D,w}$ is the calibration term (Gy(water)/M) for default values $V_o$ = 10 ml and $m_o$ = 100 mg. The $k_i$'s are correction factors from the readout (e.g. temperature), the $k_j$'s from the irradiation. The uncertainty is calculated from the combined uncertainties of the concentration measurement, electrode parameters and dose calibration data;

* output required data-begin again; or disconnect from electrometer (interface disconnection)

The subroutine "analyse" comprises following steps :

* The sample is mixed during 10 seconds after addition of the $\alpha$-alanine powder or tablet in a predetermined volume water $V_o$. Time t and potential E are continuously monitored on the screen.
* The potential E is recorded two minutes after stabilization of the electrode : extrapolation of measured potential values $E_j$ to $E_{j}, \infty$ until the value ($E_{j}, \infty$ -$E_{j-1}, \infty$) is less than the preset value $\Delta$ E $\infty$ . The extrapolation is carried out by a Levenberg-Marquardt algorithm on the exponential function obtained by the dynamic diffusion model of the electrode :

$$E(t) = E(t_0) + (E_\infty - E_0)\,(1 - e^{-(t-t_0)/\tau}) \qquad (6)$$

* return to main program with potential $E_\infty$. (Fig.2)

## Claims

**1.** Dosimetric system for measuring a dose of irradiation by absorption on a sample of solid $\alpha$-alanine comprising :

- an ammonia-probe (1) ;
- a pH-electrode (2) ;
- an electronical balance (16) ;
- a potentiometer (4);
- pumping units (17) + (18) ;
- a temperature-sensor (14) ;
- a computer (7) ; and
- a printer (6),

characterized in that the potentiometer is a dual-input potentiometer (4) and in that the dosimetric system comprises further :

i) a readout equipment and a configuration for automatic use of an Ion Selective Ammonia Electrode ; formed of the components, described above, and their interfaces to a central PC, which allows

1) the complete control of the attached instruments (dispenser,balance, potentiometer)

2) a direct and continuous measurement of all parameters which are important for the $NH_3$ measurement (temperature, potential, volume, mass).

ii) an analysis software with a serial calibration of a blank sample and automatic correction of temperature, fading radiation energy and dose-rate dependence by potential extrapolation and improved accuracy ; and

iii) a detector material composition consisting of pure (DL- or L-) $\alpha$-alanine, blended with agents for appropriate $H_2O$ - dissolution, tablet geometry, radiation characteristics and ruggedness.

**2.** Dosimetric system according to claim 1, characterized in that the pH electrode is connected to the dual input (3) of an ISE electrometer (4) connected to a control unit controlled by a central personal computer (7) to which an electronical balance (16) is connected.

**3.** Dosimetric system according to claim 1 or 2, characterized in that the sample analysis occurs by direct concentration measurement after this foregoing calibration or incremental techniques (single, double or

multiple addition).

4. Process for measuring a dose of irradiation comprising the following steps :
   - absorbing the dose of irradiation on a sample of solid α-alanine ;
   - weighing the sample of solid α-alanine ;
   - dissolving the sample of irradiated solid α-alanine in neutral or slighly acid water ;
   - adding a sufficient amount of basic agent in the water ;
   - diffusion of the dissolved gas through a membrane foil ;
   - measuring of the hydroxide ions-activity by means of a pH-electrode coupled to a Ag/AgI reference electrode ;
   - calculation of a transfer equation by non-linear regression with least square fitting by an iterative GAUSS-NEWTON method.
   - computing the concentration ;
   - the error estimate on the dose of irradiation of the sample is calculated from the combined uncertainties on the calibration factor, the ammonia concentration (derived from the uncertainties on the parameters in the Nicholskii-Eisenmann equation) and the above correction factors.

5. Process according to claim 1, characterized in that it comprises calibration irradiation data, with corrections for the sample (e.g. analysis temperature) and the irradiation temperature, radiation spectrum).

6. Process according to claim 2, characterized in that it comprises the determination of correction factors taking in consideration the irradiation temperature, fading, radiation energy and dose-rate dependence.

7. Process according to claim 3, characterized in that it includes all disturbance from reagentia and electrode.

8. Process according to any one of the previous claims, characterized in that it uses multiple addition techniques through the Nicholskii-Eisenmann equation with improved time response by potential extrapolation and improved accuracy.

FIG. 1

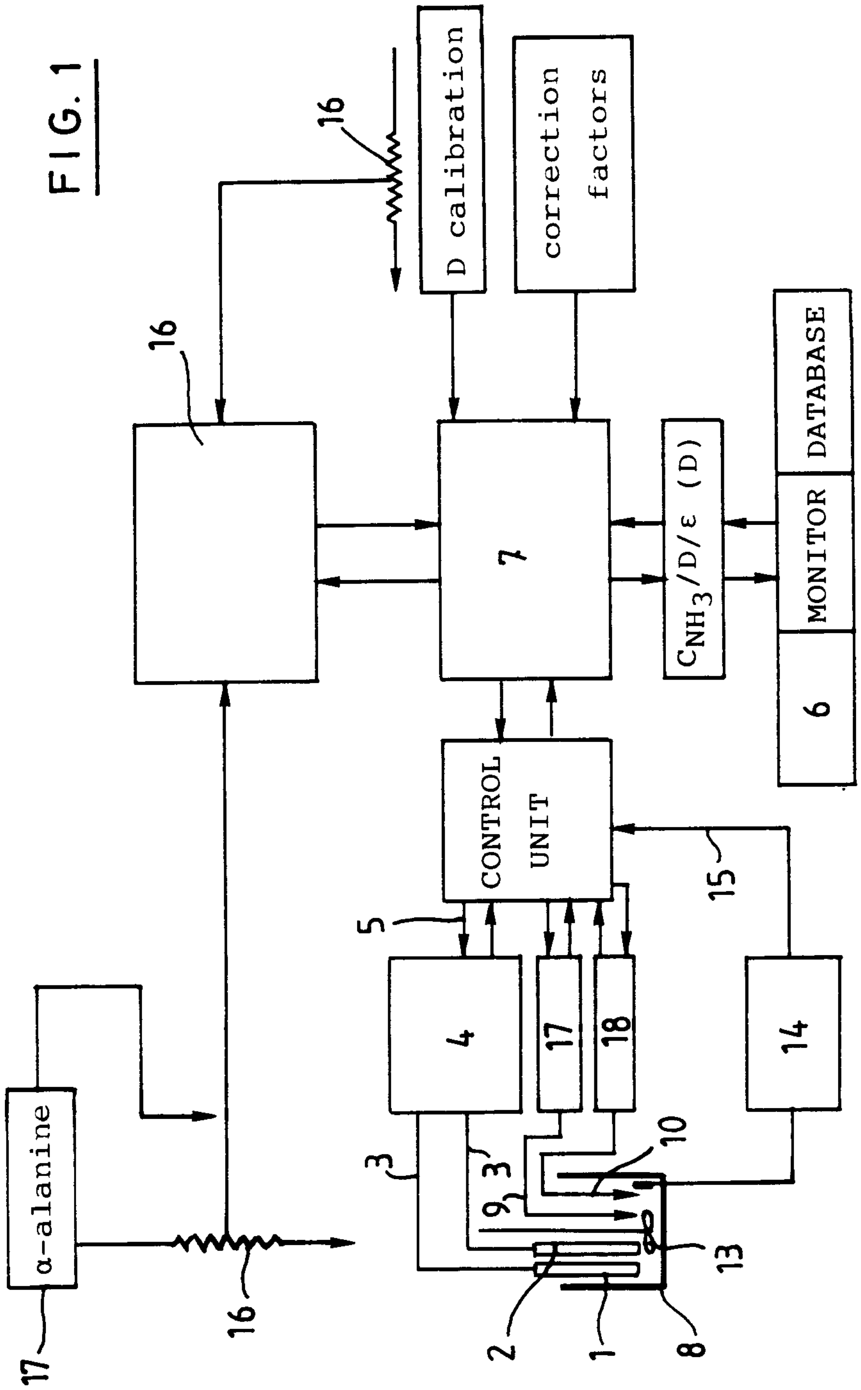

D calibration
correction factors
7
$C_{NH_3}$/D/ε (D)
6
MONITOR
DATABASE
CONTROL UNIT
α-alanine
4
17
18
14
16
17
5
15
3
9
10
13
2
1
8

FIG. 2

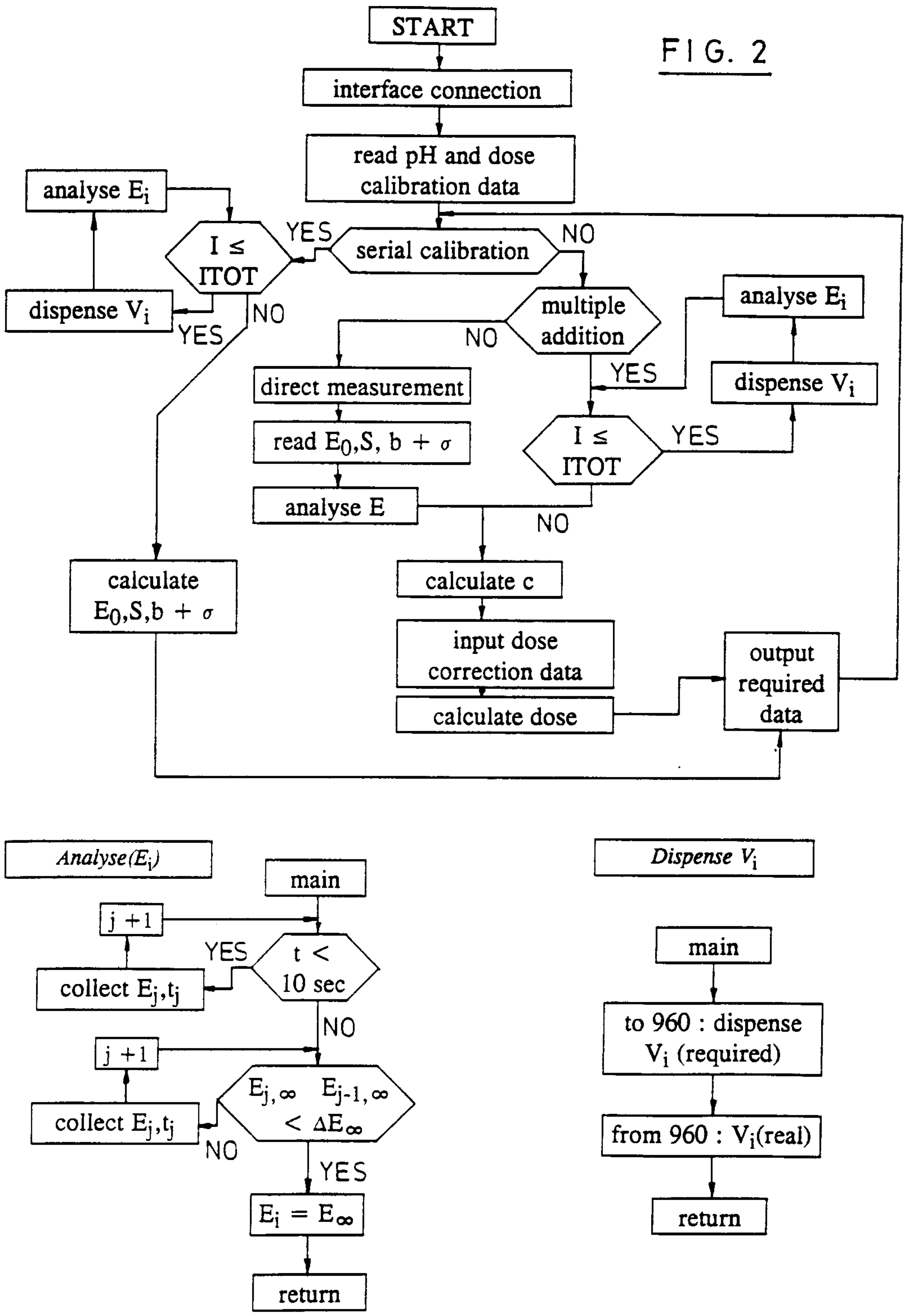
START
interface connection
read pH and dose calibration data
serial calibration
YES
NO
I ≤ ITOT
analyse $E_i$
dispense $V_i$
YES
NO
multiple addition
NO
YES
analyse $E_i$
dispense $V_i$
direct measurement
read $E_0$,S, b + σ
analyse E
I ≤ ITOT
YES
NO
calculate $E_0$,S,b + σ
calculate c
input dose correction data
calculate dose
output required data
Analyse($E_i$)
main
j +1
YES
t < 10 sec
collect $E_j$,$t_j$
NO
j +1
$E_{j,\infty}$ $E_{j-1,\infty}$ < $\Delta E_\infty$
collect $E_j$,$t_j$
NO
YES
$E_i$ = $E_\infty$
return
Dispense $V_i$
main
to 960 : dispense $V_i$ (required)
from 960 : $V_i$(real)
return

European Patent Office

# EUROPEAN SEARCH REPORT

Application Number

EP 91 87 0113

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | APPL. RADIAT. ISOT. vol. 41, no. 7, 1990, pages 621-628, Oxford, GB; K. VAN LAERE et al.: "Operation and methodology of an alanine ion-selective electrode dosimetric system: I. Electrode characteristics and data analysis"<br>* The entire article *<br>--- | 1-8 | G 01 T 1/04 |
| D,A | APPL. RADIAT. ISOT. vol. 41, no. 7, 1990, pages 629-633, Oxford, GB; K. VAN LAERE et al.: "Operation and methodology of an alanine ion-selective electrode dosimetric system: II. Dose-response"<br>* The entire article *<br>--- | 1-8 | |
| A | US-A-3 030 510 (REEDER)<br>* Column 2, lines 7-14,27-71; fig. *<br>----- | 1 | |
| | | | TECHNICAL FIELDS SEARCHED (Int. Cl.5) |
| | | | G 01 T |

The present search report has been drawn up for all claims

| Place of search | Date of completion of the search | Examiner |
|---|---|---|
| THE HAGUE | 10-04-1992 | DATTA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)